# EUROPÄISCHE PATENTANMELDUNG

(11) **EP 2 650 666 A2**
(43) Veröffentlichungstag der Anmeldung: **16.10.2013**
(21) Anmeldenummer: 13162124.5
(22) Anmeldetag: 03.04.2013
(51) Int. Cl.: G01M 13/02, F03D 11/00, G01M 13/04

(54) **Vorrichtung für Belastungsprüfungen an Windenergieanlagen**

(30) Priorität: 10.04.2012 DE 102012103046
(71) Anmelder: Klinger, Friedrich, Prof. Dr.-Ing., 66119 Saarbrücken (DE)
(72) Erfinder: Klinger, Friedrich, Prof. Dr.-Ing., 66119 Saarbrücken (DE)
(74) Vertreter: Bernhardt, Reinhold

(57) **Zusammenfassung**

Die Erfindung betrifft eine Vorrichtung für Belastungsprüfungen, insbesondere Lebensdaueruntersuchungen, an Windenergieanlagen. Die erfindungsgemäße Vorrichtung ist gekennzeichnet durch Einrichtungen zur Einleitung den Betriebslasten entsprechender Lasten an den die Rotorblätter (6) haltenden Lagerungen (7), wobei die genannten Einrichtungen in der Art der Rotorblätter (6) an den Lagerungen (7) anbringbare, gegenüber den Rotorblätter (6) verkürzte Prüfhebel (11) mit Beschwerungskörpern (12) an ihren freien Enden sowie eine an den Prüfhebeln (11) angreifende Drehantriebseinrichtung (14-18) aufweisen.

## Beschreibung

Die Erfindung betrifft eine Vorrichtung für Belastungsprüfungen, insbesondere Lebensdaueruntersuchungen, an Windenergieanlagen sowie ein entsprechendes Prüfverfahren.

Bekanntermaßen unterliegen Windenergieanlagen dauerhaft erheblichen statischen und dynamischen Betriebsbelastungen. Die sich drehenden Rotorblätter leiten an ihren Fußpunkten, an denen sie auf der Rotornabe um ihre Längsachse drehbar gelagert sind, ständig variierende Kräfte und Drehmomente ein. Langfristig kann dies zu Schäden an den Komponenten und schließlich zum Verlust der Windenergieanlage führen.
Für die Effizienz der Energiegewinnung durch Windkraft spielt die Lebensdauer der Windenergieanlagen eine entscheidende Rolle. Im Rahmen der Entwicklung und Fertigung solcher Anlagen besteht daher Bedarf an Prüfmitteln, die zuverlässige Aussagen zur Lebensdauer ermöglichen.

Aus der WO 2011/014870 A1 ist eine Prüfvorrichtung mit einem Antriebsmotor bekannt, durch die über ein gelenkig mit dem Antriebsmotor verbundenes Zwischenglied Drehmomente und Kräfte in den sich an die Rotornabe anschließenden Antriebsstrang der zu prüfenden Windenergieanlage einleitbar sind.

Der Erfindung liegt die Aufgabe zugrunde, eine gegenüber diesem Stand der Technik konstruktiv vereinfachte neue Prüfvorrichtung zu schaffen, die bei wesentlich verringertem Betriebsenergiebedarf eine weiterreichende umfassendere Prüfung der Windenergieanlagen ermöglicht.

Die diese Aufgabe lösende Vorrichtung nach der Erfindung ist gekennzeichnet durch Einrichtungen zur Einleitung den Betriebslasten entsprechender Lasten an den die Rotorblätter haltenden Lagerungen, wobei die genannten Einrichtungen in der Art der Rotorblätter an den Lagerungen anbringbare, gegenüber den Rotorblättern verkürzte Prüfhebel mit Beschwerungskörpern an ihren freien Enden sowie eine an den Prüfhebeln angreifende Drehantriebseinrichtung umfassen.

Vorteilhaft bezieht diese Prüfeinrichtung nach der Erfindung die Rotornabe und deren Blattlagerungen in die Prüfung mit ein.
Die erfindungsgemäßen, gegenüber den Rotorblättern platzsparend verkürzten Prüfhebel simulieren als solche an den Blattlagerungen Lasten, wie sie im Betrieb der Windenergieanlage im Wesentlichen allein durch das Gewicht der Rotorblätter hervorgerufen werden. Diesen Betriebslasten kommt der weitaus größte Anteil an den im Betrieb an den Blattlagerungen anliegenden Gesamtlasten zu. Die erfindungsgemäße Drehantriebseinrichtung simuliert im Wesentlichen den geringeren Windanteil an den Gesamtlasten.

Zweckmäßig entsprechen die Prüfhebel bis auf die Beschwerungskörper den verkürzten Rotorblättern und sind insbesondere mit den verkürzten Rotorblättern baugleich, so dass sie sich in Bezug auf Lastübertragungen wie die Restabschnitte der Rotorblätter nach der Verkürzung verhalten.

Es versteht sich, dass die Massen der Beschwerungskörper zweckmäßig so bemessen sind, dass sie die durch die Verkürzung der Rotorblätter entfallene Masse genau ausgleichen. Die Prüfhebel simulieren dann exakt die allein von den Gewichten der Rotorblätter herrührenden Betriebslasten an den Blattlagerungen.

In einer besonders bevorzugten Ausführungsform, in welcher die Drehachse der Drehantriebseinrichtung zweckmäßig koaxial oder nur leicht versetzt zur Rotordrehachse angeordnet ist, greift die Drehantriebseinrichtung an den Prüfhebeln über Gestängeelemente an, wobei vorzugsweise je Prüfhebel ein Gestängeelement vorgesehen ist.

In der besonders bevorzugten Ausführungsform der Erfindung stehen die Gestängeelemente, die jeweils an den Prüfhebel und die Drehantriebseinrichtung angelenkt sein können, im Winkel zu einer durch die Rotordrehachse und den betreffenden Prüfhebel aufgespannten Ebene. Durch solche, schräg zu der genannten Ebene angeordnete Gestängeelemente lassen sich von der Drehantriebseinrichtung auf die Prüfhebel Kräfte mit einer zur Rotorebene parallelen und einer zur Rotorebene senkrechten Komponente übertragen. Solche Kräfte und daraus resultierende, auf Achsen an den Blattlagerungen bezogene Drehmomente werden in ähnlicher Weise durch den senkrecht zur Rotorebene anströmenden Wind erzeugt.

Indem die Prüfhebel durch die schräg angreifenden Gestängeelemente verformbar sind, so dass die Angriffspunkte der Gestängeelemente an den Prüfhebeln in eine zur Längsachse der (unverformten) Prüfhebel versetzte Position gelangen, lassen sich an den Blattlagerungen auch Drehmomente um die Längsachse der Rotorblätter simulieren, wie sie bei anliegendem Wind unter Belastung der Blattlagerungen auftreten können.

In weiterer vorteilhafter Ausgestaltung der Erfindung ist der Winkel der Gestängeelemente zu der betreffenden Ebene verstellbar. Insbesondere kann diese Verstellung durch Änderung der Längen der an ihren Enden angelenkten Gestängeelemente oder des axialen Abstands der Drehantriebseinrichtung zu der Rotornabe erfolgen. Die Änderung des Winkels erlaubt weitere Variationen der Prüfbelastung.

In einer weiteren Ausführungsform der Erfindung können über die Drehantriebseinrichtung hinaus weitere, an den Prüfhebeln angreifende Einrichtungen zur Einleitung von Lasten an den die Rotorblätter haltenden Lagerungen vorgesehen sein.

Diese weiteren Einrichtungen können z.B. Kräfte ausübende Aktoren umfassen, die mit den Gestängeelementen in Reihe verbunden sind, z.B. hydraulische Kraftzylinder oder elektromechanische Krafterzeuger.

Zweckmäßig sind diese Aktoren wahlweise nur einzeln aktivierbar oder wirken gegeneinander, derart, dass allein der Rotor der Drehantriebseinrichtung die jeweiligen Gegenkräfte aufbringen kann.

In der besonders bevorzugten Ausführungsform weisen die weiteren Einrichtungen mit den Prüfhebeln beweglich verbundene Körper auf, die durch einen Antrieb beschleunigt, unter Rückwirkung der Beschleunigungsgegenkräfte auf die Prüfhebel bewegbar sind. Vorteilhaft lassen sich durch solche Einrichtungen hochfrequente Prüfbelastungen simulieren, wie sie im Betrieb von Windenergieanlagen durch Turbulenzen des anliegenden Windes erzeugt werden.

Die genannten Körper können jeweils zu einer Drehachse exzentrisch angeordnet und durch den Antrieb um die Drehachse drehbar sein. Die Gegenkräfte der Zentrifugalbeschleunigung werden dann durch die Prüfhebel aufgebracht und führen an den Blattlagerungen zu Belastungen hoher Frequenz.

Je Prüfhebel können wenigstens zwei Körper mit je einem Antrieb vorgesehen sein, wobei die Antriebe vorzugsweise zufallsgesteuert sind. Indem z.B. die Drehzahl zweier Drehantriebe zufallsgesteuert verändert wird, ergeben sich an den Drehlagerungen unregelmäßig schwankende Lastmomente, wie sie den durch Luftverwirbelungen erzeugten Betriebslastschwankungen entsprechen.

Insbesondere in der letztbeschriebenen Ausführungsform weisen die Gestängeelemente jeweils zweckmäßig elastische Variationen der Länge der Gestängeelemente erlaubende Elemente auf, z.B. eine in Reihe mit Abschnitten des Gestängeelements angeordnete Schraubenfeder.

Das eingangs genannte erfindungsgemäße Verfahren für Belastungsprüfungen, insbesondere Lebensdaueruntersuchungen, an Windenergieanlagen, ist dadurch gekennzeichnet, dass von den Betriebslasten, die im Betrieb der Windenergieanlage an den die Rotorblätter haltenden Lagerungen angreifen, die allein durch die jeweilige Masse der Rotorblätter bewirkten Anteile als Funktion der Zeit ermittelt und den Anteilen gleiche Prüflasten durch Anbringung entsprechende Massen aufweisender Prüfhebel in der Art der Rotorblätter an den Lagerungen und Drehung der Prüfhebel um die Rotordrehachse erzeugt werden.

Zur Erzeugung der Prüflasten bedarf es erfindungsgemäß über die Drehung des Rotors hinaus keinerlei aktiver Krafterzeugung.

In einer Ausführungsform des erfindungsgemäßen Verfahrens werden ferner die jeweiligen Differenzen zwischen den Betriebslasten und ihren allein durch die Rotorblattmassen bewirkten Anteilen als Funktion der Zeit ermittelt, die Zeitfunktion durch Fourier-Analyse in eine niederfrequente und eine hochfrequente Komponente zerlegt und den niederfrequenten und hochfrequenten Komponenten entsprechende Prüflasten voneinander unabhängig durch unterschiedliche Einrichtungen erzeugt. Wie vorangehend bereits erwähnt, ergeben sich die hochfrequenten Komponenten durch Windturbulenzen im Betrieb der Windenergieanlage.

In einer weiteren Ausführungsform der Erfindung werden die niederfrequenten Komponenten mit Hilfe auf die Prüfhebel linear einwirkender Aktoren sowie einen die Prüfhebel zur Drehung antreibenden Motor erzeugt, während die hochfrequenten Komponenten durch mit den Prüfhebeln verbundene Schwing- oder Unwuchtmassen erzeugt werden.

Die Erfindung wird nachfolgend anhand von Ausführungsbeispielen und der beiliegenden, sich auf diese Ausführungsbeispiele beziehenden Zeichnungen weiter erläutert. Es zeigen:
- Fig. 1: eine Darstellung des Koordinatensystems für die auf eine Windenergieanlage einwirkenden Betriebslasten,
- Fig. 2: ein erstes Ausführungsbeispiel für eine Prüfvorrichtung nach der Erfindung in einer Seitenansicht,
- Fig. 3 bis 5: Detailansichten der Prüfvorrichtung von Fig. 2, eine Teilansicht eines weiteren Ausführungsbeispiels für eine Prüfvorrichtung nach der Erfindung,
- Fig. 6: ein zweites Ausführungsbeispiel für eine Prüfvorrichtung nach der Erfindung in Teildarstellung, und
- Fig. 7: ein weiteres Ausführungsbeispiel für eine Prüfvorrichtung nach der Erfindung.

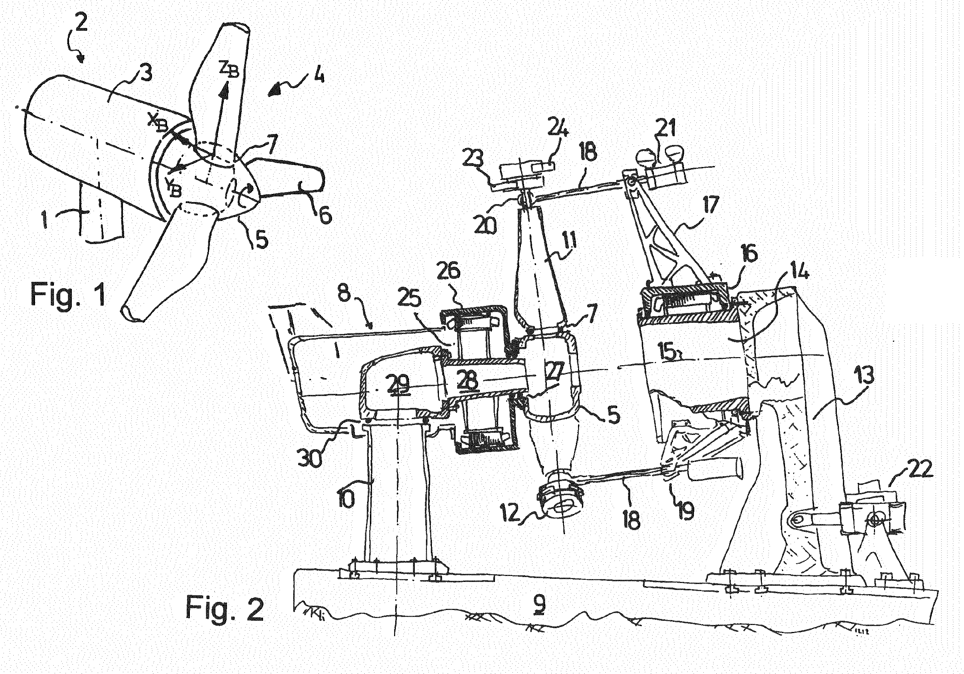

Eine in Fig. 1 in Teilansicht gezeigte Windenergieanlage weist einen Turm 1 und einen auf dem Turm 1 um eine vertikale Achse drehbar gelagerten Turmkopf 2 auf. Der Turmkopf 2 umfasst ein Turmkopfgehäuse 3 und einen Rotor 4. In dem Rotorgehäuse 2 ist, in Fig. 1 nicht sichtbar, der Generator der Windenergieanlage untergebracht. Der Rotor 4 besteht aus einer Rotornabe 5 und Rotorblättern 6. Die an einem Ende mit der Rotornabe 5 verbundenen Rotorblätter 6 sind an der Rotornabe 5 bei 7 um die Längsachse des betreffenden Rotorblatts drehbar gelagert. Das Koordinatensystem für ein Rotorblatt hat seinen Ursprung in der Blattwurzel und dreht mit dem Rotor.

Die nachfolgend anhand der Fig. 2 bis 7 beschriebenen Prüfvorrichtungen simulieren die an den Blattlagerungen 7 durch die Rotorblätter 6 eingeleiteten Betriebslasten, die sich einerseits allein aus den Gewichtskräfte ausübenden Massen der Rotorblätter und andererseits aus den an den Rotorblättern angreifenden Windkräften ergeben.

Als Komponenten der Betriebslasten treten an jeder der Blattlagerungen 7 ein Biegemoment um die zur Rotordrehachse parallele Achse X_{B}, ein weiteres Biegemoment um die dazu senkrechte Achse Y_{B} und ein Torsionsmoment um die Längsachse Z_{B} des betreffenden Rotorblatts auf. Ferner ergeben sich an den Blattlagerungen 7 in Richtung der Achsen X_{B}, Y_{B} und Z_{B} wirkende Kräfte.

Fig. 2 zeigt einen durch eine Prüfvorrichtung zu untersuchenden Prüfling 8, der bis auf die Rotorblätter einem kompletten Turmkopf entspricht.

Die zur Untersuchung des Prüflings 8 vorgesehene Prüfvorrichtung umfasst ein Fundament 9, mit einem ersten, den Prüfling 8 tragenden Ständer 10. Als wesentliche Bestandteile umfasst die Prüfvorrichtung ferner Prüfhebel 11, die in der Art der Rotorblätter über je eine Blattlagerung 7 mit der Rotornabe 5 verbunden sind und deren Länge etwa der halben Länge der Rotorblätter entspricht. An ihren freien, den Blattlagerungen 7 abgewandten Enden ist an den Prüfhebeln 11 jeweils eine Beschwerung 12 angebracht, deren Masse in dem gezeigten Ausführungsbeispiel genau der Masse derjenigen Teile der Rotorblätter entspricht, um die die Prüfhebel gegenüber den Rotorblättern verkürzt sind. Bis auf die Beschwerungen sind die Prüfhebel baugleich mit den betreffenden Abschnitten der Rotorblätter.

Die in Fig. 2 gezeigte Vorrichtung zur Untersuchung des Prüflings 8 weist ferner einen sich von dem Fundament 9 erstreckenden zweiten Ständer 13 auf, welcher einen Prüfmotor 14 hält, dessen Drehachse 15 koaxial zur Drehachse der Rotornabe 5 angeordnet ist.

Der Motor 14 umfasst einen Außenläufer 16, von dem sich Ausleger 17 in einer zur Länge der Prüfhebel 11 vergleichbaren Länge erstrecken. Jedem Prüfhebel 11 ist ein solcher Ausleger 17 zugeordnet.

Die Ausleger 17 mit den betreffenden Prüfhebeln 11 verbindende Gestängeelemente 18 sind jeweils bei 19 und 20 an den betreffenden Ausleger 17 bzw. Prüfhebel 11 angelenkt.

Über einen Kraftzylinder 21 lässt sich eine an den Anlenkungen 19,20 anliegende Kraft erzeugen und der Abstand zwischen den Anlenkungen verändern.

Über einen weiteren Kraftzylinder 22 kann die gesamte durch den zweiten Ständer 13 gehaltene Anordnung in Richtung der Drehachse 15 verschoben werden, so dass sich der Anlenkwinkel der Gestängeelemente 18 an die Prüfhebel 11 (und die Ausleger 17) entsprechend ändert.

Die Länge L der Prüfhebel 11 ist erfindungsgemäß so gewählt, dass einerseits die über das Gestängeelement 18 in X_{B}-Richtung eingeleitete Kraftkomponente Fₓ das gewünschte Biegemoment My_{B} um Y_{B}-Achse an der Blattlagerung bzw. Blattwurzel 7 erzeugt.

Dadurch wird erfindungsgemäß erreicht, dass mit nur einer Komponente Fₓ am Gestängeelement 18 an der Blattwurzel 7 sowohl die Schubkraft F_{xB} = Fₓ als auch das Biegemoment M_{yB} = Fₓ * L gleichzeitig als gewünschte Betriebslastkomponenten erzeugt werden.

Andererseits wird das unter dem Winkel α zur Rotorebene geneigte Gestängeelement 18 auch die Kraftkomponente Fy auf den Prüfhebel 11 übertragen. Sie wird so gewählt, dass an der Blattwurzel 7 die Biegemomentkomponente M_{xB} = Fy * L erzeugt wird.

Damit wird erreicht, dass mit nur einer Kraft im Gestängeelement 18 über den Einleitungspunkt 20 an dem Prüfhebel 11 gleichzeitig 4 Prüflastkomponenten M_{xB}, M_{yB}, F_{xB} und Fy an je einem Blattlager 7 erzeugt werden.

Gleichzeitig werden die Lastkomponenten um die Z_{B}-Achse erzeugt, wobei die Kraft F_{ZB} in der Längsachse des Blattes durch Fliehkräfte der Beschwerungskörper 12 bei Drehung des Rotors von selbst entstehen. Das Torsionsmoment M_{ZB} um die Blattlängsachse entsteht ebenfalls von selbst, wenn durch die Biegeverformung des Prüfhebels 11 die Auslenkung des Kraftangriffspunktes bzw. Gelenkpunktes 20 von der Rotationsachse Z_{B} des Blattlagers in ähnlicher Größenordnung liegt wie die Durchbiegung des realen Rotorblattes.

Somit können alle 6 Lastkomponenten an je einem Blattlager 7 mit der Kraft im Gestängeelement 18 und den Massekräften der Beschwerungskörper 12 erzeugt werden, die aufgrund langsamer Veränderungen der Windgeschwindigkeiten am realen Rotor entstehen.

Die in Fig. 2 beschriebene Prüfvorrichtung umfasst ferner bei 23 und 24 angedeutete, durch (nicht gezeigte) Antriebe beschleunigt bewegbare Massen. Auf die Prüfhebel 11 zurückwirkende Beschleunigungsgegenkräfte können an den Blattdrehlagerungen 7 entsprechend hochfrequente Lasten erzeugen.

Der Prüfling 8 weist in dem gezeigten Ausführungsbeispiel einen Generator 25 auf, mit dessen Außenläufer 26 die Rotornabe 5 direkt verbunden und mit dem sie gemeinsam über ein Momentenlager 27 auf einem Achskörper 28 gehalten ist. Ein Trägerkörper 29, mit dem der Achskörper 28 über einen Flansch in Verbindung steht, ist über eine Drehlagerung 30 auf dem Ständer 10 montiert.

Um den Prüfling 8 mit Hilfe der vorangehend beschriebenen Prüfvorrichtung zu untersuchen, sind die Prüfhebel 11 an der Rotornabe 5 zu montieren und über die Gestängeelemente 18 mit den Auslegern 17 am Außenläufer 16 des Prüfmotors 14 zu verbinden.

Die Ausleger 17, die Gestängeelemente 18 und die Prüfhebel 11 übertragen eine Drehbewegung des Prüfmotors 14 um die Achse 15 auf die Rotornabe 5. Wie nachfolgend erläutert wird, entsprechen die dabei durch die Prüfhebel 11 in die Blattlagerungen 7 eingeleiteten Kräfte und Momente etwa den im Betrieb unter Windeinwirkung durch die Rotorblätter auf die Blattlagerungen übertragenen Betriebslasten. Die beschriebene Prüfvorrichtung simuliert damit alle Betriebslasten, die auf den Turmkopf einer Windenergieanlage über die Blattlagerungen einwirken.

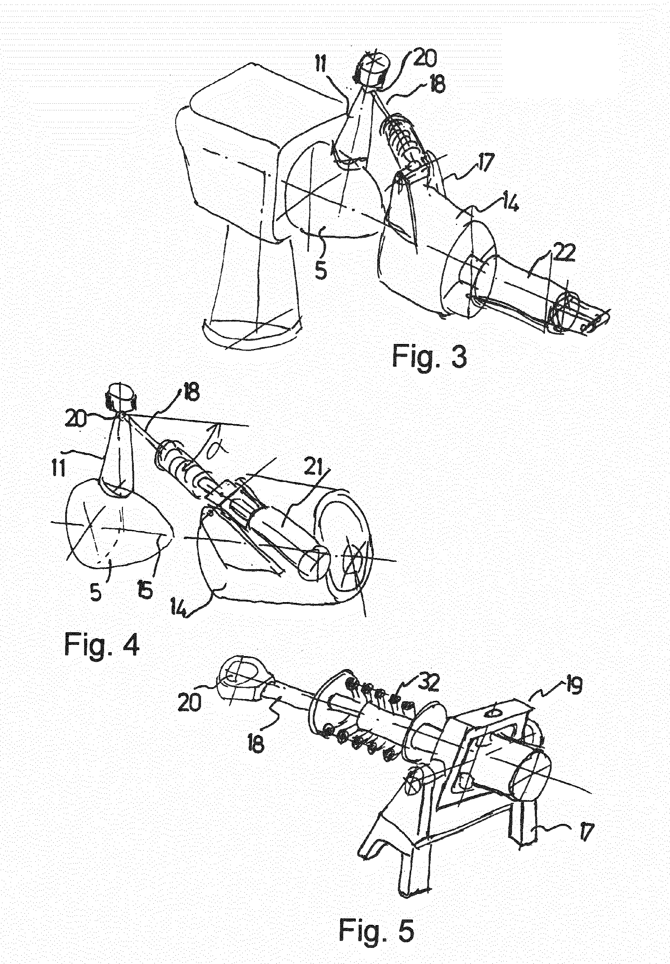

Wie die Fig. 3 bis 5 verdeutlichen, greifen die Gestängeelemente 18 an den Gelenkpunkten 20 der Krafteinleitung in die Prüfhebel 11 unter einem Winkel α an, d.h., die Gestängeelemente erstrecken sich im Winkel α zu der durch den jeweiligen Prüfhebel 11 und die Drehachse 15 aufgespannten Ebene. Die durch die Gestängeelemente 18 in ihrer Längsrichtung übertragenen Kräfte weisen dementsprechend eine zur Rotorblattebene parallele Komponente und eine zur Rotorblattebene senkrechte Komponente auf.

Die zur Rotorblattebene parallele Komponente erzeugt im Gelenkpunkt 20 und in der Blattwurzel 7 eine Kraft in Richtung der jeweiligen Achse Y_{B}, und ein Drehmoment um die Achse Y_{B}. Die zur Rotorblattebene senkrechte Komponente erzeugt dementsprechend eine Kraft in Richtung der Achse X_{B} und ein Drehmoment um die Achse X_{B}. Diese Kräfte und Drehmomente entstehen in ähnlicher Weise im Betrieb bei Windeinwirkung auf die Rotorblätter, indem durch die Strömung am Blattprofil Kraftkomponenten parallel zur Rotorebene und senkrecht dazu erzeugt werden.

Durch die jeweils schräg an den Prüfhebeln 11 angreifenden Gestängeelemente 18 gelangen die Krafteinleitungspunkte in eine zur jeweiligen Achse Z_{B} versetzte Position, so dass, wie bei Durchbiegung des Rotorblattes durch Windeinwirkung ein Drehmoment an den Blattlagerungen auch um die Achse Z_{B} erzeugt wird.

Die an den Blattlagerungen 7 eingeleitete Kräfte und Drehmomente lassen sich in gewünschter Weise variieren, indem z. B. das Drehmoment des Prüfmotors 14 oder/und der Winkel α, unter dem die Gestängeelemente 18 an den Prüfhebeln 11 angreift, verändert wird. Zwecks Veränderung des Winkels α wird der Abstand zwischen dem Prüfmotor 14 und der Rotornabe 5 mit Hilfe des Kraftzylinders 22 verstellt. Die an ihren Enden angelenkten Gestängeelemente 18 ändern dann automatisch unter Variation des Winkels α ihre Lage. Alternativ könnte der Winkel α durch Änderung des Hubes des Kraftzylinders 21 verstellbar sein.

Weitere Variationen der Prüflasten können mit Hilfe der Kraftzylinder 21 erfolgen, welche in Längsrichtung der Gestängeelemente 18 wirken und mit den Gestängeelementen jeweils eine Reihenanordnung bilden. Die Kraftzylinder 21 können so betätigt werden, dass sie gegeneinander wirken.

Wie die Fig. 3 bis 5 ferner erkennen lassen, können die Gestängeelemente 18 ferner eine (in Fig. 2 nicht gezeigte) Feder, insbesondere Schraubenfeder, in einer Reihenanordnung mit den übrigen Teilen des Gestängeelements aufweisen. Wie Fig. 5 zeigt, lässt sich die Anlenkung 19 als Kardangelenk ausbilden.

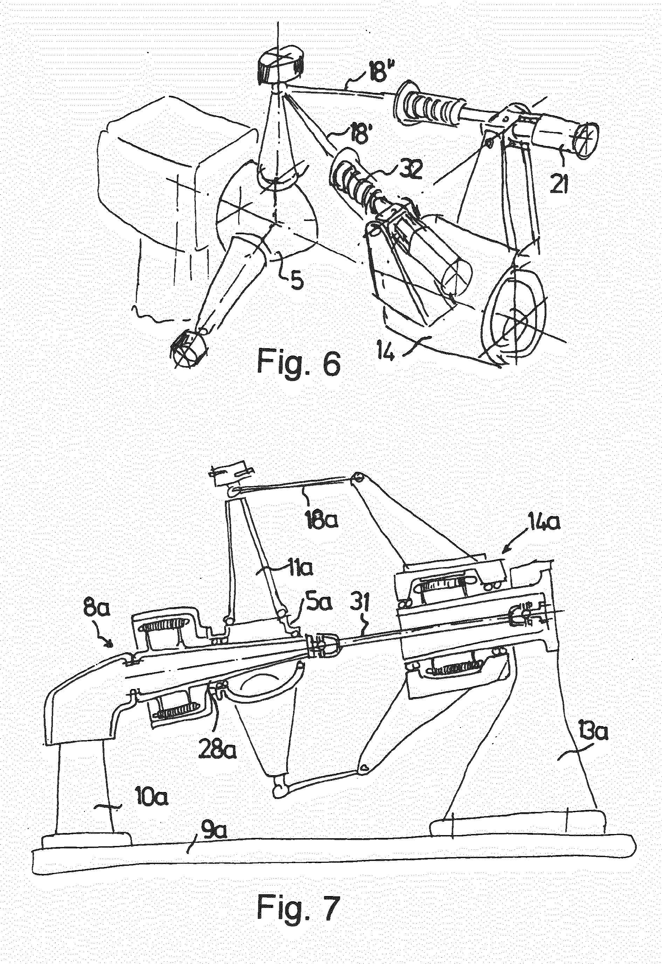

Abweichend von dem vorangehenden Ausführungsbeispiel zeigt Fig. 6 eine Ausführungsform, bei der je Prüfhebel 11 zwei Gestängeelemente 18' und 18" mit je einer Schraubenfeder 32 und einem Kraftzylinder 21 vorgesehen sind. Über die Kraftzylinder und den Prüfmotor 14 können beliebige Kräfte und Drehmomente an den Blattlagerungen 7 eingeleitet werden.

Die Simulation hochfrequenter, durch Luftturbulenzen erzeugter Betriebslasten an den Blattlagerungen 7 erfolgt durch Drehbewegung der Massen 23,24, die jeweils mit Hilfe eines Elektromotors um eine Achse, zu der sie exzentrisch angeordnet sind, gedreht werden. Durch Zufallssteuerung der Drehgeschwindigkeit der Antriebsmotoren lassen sich unregelmäßige Kraft- und Drehmomentverläufe an den Blattlagerungen 7 erzeugen, die den durch Luftverwirbelungen erzeugten hochfrequenten Verläufen ähnlich sind.

Es wird nun auf Fig. 7 Bezug genommen, wo gleiche oder gleichwirkende Teile mit derselben Bezugszahl wie in den vorangehenden Figuren bezeichnet sind, wobei der betreffenden Bezugszahl der Buchstabe a beigefügt ist.

Die in Fig. 7 gezeigte Prüfvorrichtung unterscheidet sich von den vorangehenden Prüfvorrichtungen dadurch, dass zwischen einem Achskörper 28a in der Rotornabe 5a eines Prüflings 8a und einem Ständer 13a eine auf Zug belastbare Verbindung 31 hergestellt ist, welche durch Abtragung von Prüfkräften die Ständer 10a und 13a entlastet. Es ist weiterhin denkbar, dass der Kraftzylinder 22 aus Fig. 2 an der Verbindung 31 angreift und den Antriebsmotor 14a entlang seiner Achse 15a verschiebt.

## Patentansprüche

1. Vorrichtung für Belastungsprüfungen, insbesondere Lebensdaueruntersuchungen, an Windenergieanlagen,
**gekennzeichnet durch** Einrichtungen zur Einleitung den Betriebslasten entsprechender Lasten an den die Rotorblätter (6) haltenden Lagerungen (7), wobei die genannten Einrichtungen in der Art der Rotorblätter (6) an den Lagerungen (7) anbringbare, gegenüber den Rotorblättern (6) verkürzte Prüfhebel (11) mit Beschwerungskörpern (12) an ihren freien Enden sowie eine an den Prüfhebeln (11) angreifende Drehantriebseinrichtung (14-18) umfassen.

2. Vorrichtung nach Anspruch 1,
**dadurch gekennzeichnet,**
**dass** die Prüfhebel (11) bis auf die Beschwerungskörper (12) in ihren Eigenschaften den verkürzten Rotorblättern entsprechen und insbesondere mit den verkürzten Rotorblättern baugleich sind.

3. Vorrichtung nach Anspruch 2,
**dadurch gekennzeichnet,**
**dass** die Beschwerungskörper (12) die durch die Verkürzung der Rotorblätter (6) entfallenen Massen ausgleichen.

4. Vorrichtung nach einem der Ansprüche 1 bis 3,
**dadurch gekennzeichnet,**
**dass** die Drehachse (15) der Drehantriebseinrichtung (14-18) koaxial oder versetzt zur Rotordrehachse der zu prüfenden Windenergieanlage angeordnet ist.

5. Vorrichtung nach einem der Ansprüche 1 bis 4,
**dadurch gekennzeichnet,**
**dass** die Drehantriebseinrichtung (14-18) an den Prüfhebeln (11) über Gestängeelemente (18), vorzugsweise ein Gestängeelemente (18) je Prüfhebel (11), angreift.

6. Vorrichtung nach Anspruch 5,
**dadurch gekennzeichnet,**
**dass** die Gestängeelemente (18) jeweils im Winkel (α) zu einer durch die Rotordrehachse (15) und den betreffenden Prüfhebel (11) aufgespannten Ebene stehen, wobei vorzugsweise die Gestängeelemente (18) an die Prüfhebel (11) und die übrige Drehantriebseinrichtung (14-17) angelenkt sind.

7. Vorrichtung nach Anspruch 6,
**dadurch gekennzeichnet,**
**dass** der Winkel (α) verstellbar ist, insbesondere durch Änderung der Längen der Gestängeelemente (18) oder/und durch Änderung des axialen Abstands der Drehantriebseinrichtung (14-18) zu den Prüfhebeln (11).

8. Vorrichtung nach einem der Ansprüche 1 bis 7,
**dadurch gekennzeichnet,**
**dass** über die Drehantriebseinrichtung (14-18) hinaus weitere, an den Prüfhebeln (11) angreifende Einrichtungen zur Einleitung von Lasten an den die Rotorblätter (6) haltenden Lagerungen (7) vorgesehen sind, wobei vorzugsweise die weiteren Einrichtungen mit den Gestängeelementen (18) in Reihe verbundene Aktoren, insbesondere Kraftzylinder (21), umfassen.

9. Vorrichtung nach Anspruch 8,
**dadurch gekennzeichnet,**
**dass** zur Einleitung von Lasten wahlweise nur einer der Aktoren aktivierbar ist, oder/und Aktoren in entgegengesetzten Wirkungsrichtungen aktivierbar sind.

10. Vorrichtung nach Anspruch 8 oder 9,
**dadurch gekennzeichnet,**
**dass** die weiteren Einrichtungen mit den Prüfhebeln (11) beweglich verbundene Körper (23,24) aufweisen, die durch einen Antrieb beschleunigt, unter Rückwirkung von Beschleunigungsgegenkräften auf die Prüfhebel (11) bewegbar sind.

11. Vorrichtung nach Anspruch 10,
**dadurch gekennzeichnet,**
**dass** die Körper jeweils zu einer Drehachse exzentrisch angeordnet und durch den Antrieb um die Drehachse drehbar sind, wobei vorzugsweise je Prüfhebel (11) wenigstens zwei Körper (23,24) vorgesehen sind.

12. Vorrichtung nach Anspruch 11,
**dadurch gekennzeichnet,**
**dass** für die Antriebe eine Steuerung auf Zufallsbasis vorgesehen ist.

13. Vorrichtung nach einem der Ansprüche 5 bis 12,
**dadurch gekennzeichnet,**
**dass** die Gestängeelemente (18) jeweils ein elastisch verformbares, Variationen der Länge der Gestängeelemente (18) erlaubendes Element, insbesondere eine Feder (32), aufweisen.

14. Vorrichtung nach einem der Ansprüche 1 bis 13,
**dadurch gekennzeichnet,**
**dass** die Prüfhebel (11) eine Länge L aufweisen, die die gleich dem Mittelwert aus bei verschiedenen Windgeschwindigkeiten ermittelten Quotienten (M_{yB}/F_{xB}) ist, wobei M_{yB} und F_{xB} jeweils an der Rotorblattwurzel (7) des Prüflings (8) gemessene Werte des Biegemoments in Y-Richtung und der Kraft in X-Richtung bezeichnen.

15. Verfahren für Belastungsprüfungen, insbesondere Lebensdaueruntersuchungen, an Windenergieanlagen,
**dadurch gekennzeichnet,**
**dass** von den Betriebslasten, die im Betrieb der Windenergieanlage an den die Rotorblätter (6) haltenden Lagerungen (7) angreifen, die allein durch die jeweilige Masse der Rotorblätter bewirkten Anteile in Abhängigkeit von der Zeit ermittelt und den Anteilen gleiche Prüflasten durch Anbringung entsprechende Massen aufweisender Prüfhebel (11) in der Art der Rotorblätter an den Lagerungen (7) und Drehung der Prüfhebel (11) um die Rotordrehachse erzeugt werden.

16. Verfahren nach Anspruch 15,
**dadurch gekennzeichnet,**
**dass** die jeweiligen Differenzen zwischen den Betriebslasten und ihren allein durch die Rotorblattmassen bewirkten Anteilen als Funktion der Zeit ermittelt, die Zeitfunktion durch Fourier-Aanalyse in eine niederfrequente und eine hochfrequente Komponente zerlegt und den niederfrequenten und hochfrequenten Komponenten entsprechende Prüflasten voneinander unabhängig durch unterschiedliche Einrichtungen (14,21;23,24) erzeugt werden.

17. Verfahren nach Anspruch 16,
**dadurch gekennzeichnet,**
**dass** die niederfrequenten Komponenten mit Hilfe auf die Prüfhebel linear einwirkender Aktoren (21) sowie einen die Prüfhebel (11) um die Rotordrehachse drehenden Motor (14) und die hochfrequenten Komponenten durch mit den Prüfhebeln (11) beweglich verbundene Schwing- oder Unwuchtmassen (23,24) erzeugt werden.
